# EUROPÄISCHE PATENTSCHRIFT

(11) **EP 4 293 266 B1**
(45) Veröffentlichungstag und Bekanntmachung des Hinweises auf die Patenterteilung: **22.10.2025**
(21) Anmeldenummer: 23175428.4
(22) Anmeldetag: 25.05.2023
(51) Int. Cl.: F16L 21/00, F24F 7/00, F24F 13/02, F16L 17/025, F16L 5/02, F16L 5/12, F16L 43/00

(54) **WANDHÜLSE FÜR EINEN MAUERKASTEN, MAUERKASTEN UND ANORDNUNG EINES MAUERKASTENS UND EINER WAND**
WALL SLEEVE FOR A WALL BOX, WALL BOX AND ASSEMBLY OF A WALL BOX AND A WALL
MANCHON DE PAROI POUR UN BOÎTIER DE MUR, BOÎTIER DE MUR ET AGENCEMENT D'UN BOÎTIER DE MUR ET D'UN MUR

(30) Priorität: 14.06.2022 DE 202022103328 U
(43) Veröffentlichungstag der Anmeldung: 20.12.2023
(73) Patentinhaber: Naber Holding GmbH & Co. KG, 48529 Nordhorn (DE)
(72) Erfinder: NABER, Hans-Joachim, 48527 Nordhorn (DE)
(74) Vertreter: Angerhausen, Christoph

(56) Entgegenhaltungen:
- EP-A1- 3 757 473
- EP-A2- 3 376 129
- WO-A1-2008/139024
- WO-A1-2011/148646
- WO-A1-2020/141488
- DE-C2- 3 403 886
- DE-U1- 202019 101 083
- KR-B1- 101 954 529
- US-A1- 2015 050 874

## Beschreibung

Die Erfindung betrifft eine Wandhülse für einen Mauerkasten, einen Mauerkasten und eine Anordnung eines Mauerkastens und einer Wand.

Mauerkästen werden z.B. im Küchenbau oder Belüftungsanlagen eingesetzt, um beispielsweise Wrasen, Dünste oder Dämpfe aus einer Küche abzuführen, oder z.B. einen Luftaustausch zu ermöglichen.

Bekannte Mauerkästen weisen häufig eine Wandhülse, ein mit der Wandhülse verbundenes Rohr und eine mit dem Rohr der Wandhülse gegenüberliegend befestigte Außenjalousie. Der Mauerkasten erstreckt sich dabei in der Regel durch eine Wand hindurch, so dass die Wandhülse an oder bei einer Innenseite der Wand und die Außenjalousie an oder bei einer Außenseite der Wand angeordnet ist. Eine Wandhülsen ist aus der WO 2011/48646 A1 bekannt.

Die Wandhülse ist dabei mit der Wand verschraubt, um die Wandhülse zu fixieren. Dazu müssen zuerst entsprechende Löcher in die Wand gebohrt werden, und nach dem Einschieben der Wandhülse und/oder des Rohrs in die Wand die Wandhülse mit der Wand verschraubt werden. Ein derartiger ist beispielsweise aus der DE 20 2019 101 083 U1 bekannt. Für die Montage wird damit zwingend Werkzeug benötigt. Zudem dauert die Montage damit vergleichsweise lange.

Bei anderen bekannten Mauerkästen wird die Außenjalousie mit der Wand verschraubt, um den Mauerkasten zu fixieren. Ein derartiger Mauerkasten ist z.B. aus der DE 3403886 C2 bekannt. Für dabei die Montage wird damit zwingend Werkzeug benötigt. Zudem dauert die Montage damit vergleichsweise lange.

Es ist deshalb Aufgabe der vorliegenden Erfindung, diese Nachteile zu überwinden. Diese Aufgabe wird gelöst durch eine Wandhülse nach Anspruch 1, einen Mauerkasten nach Anspruch 9 und eine Anordnung aus einer Wand und einem Mauerkasten nach Anspruch 12. Vorteilhafte Ausführungsformen sind Gegenstand der Unteransprüche.

Ein erster Aspekt der Erfindung betrifft eine Wandhülse für einen Mauerkasten, wobei die Wandhülse eine erste Öffnung zum Einströmen eines Fluids und eine mit der Öffnung fluidisch verbundene Rohraufnahme aufweist, die dazu eingerichtet ist, ein Rohr aufzunehmen, so dass, wenn ein Rohr in der Rohraufnahme aufgenommen ist, Fluid von der Öffnung in das Rohr einströmen kann, wobei die Wandhülse einen Wandanschlag aufweist, der an einer der Rohraufnahme abgewandten Seite der Wandhülse angeordnet ist, so dass der Wandanschlag eine Einschubtiefe der Wandhülse festlegt, wobei die Wandhülse mindestens eine Klemmrippe aufweist, die an einer Außenseite der Wandhülse angeordnet ist und sich zumindest abschnittsweise entlang der Außenseite erstreckt, dadurch gekennzeichnet, dass die Öffnung dazu eingerichtet ist, ein Anschlusselement aufzunehmen, wobei die Öffnung einen Anschlag, der eine Einschubtiefe eines Anschlusselements in die Öffnung festlegt, und eine Innenkontaktfläche aufweist, wobei die Innenkontaktfläche dazu eingerichtet ist, bei in die Öffnung aufgenommenen Anschlusselement das Anschlusselement zumindest abschnittsweise zu kontaktieren.

Wird oder ist die Wandhülse in eine Wand eingesetzt, z.B. in eine Durchgangsbohrung oder in eine in eine Durchgangsbohrung eingesetzte Hülse, so kann die Klemmrippe die Wandhülse entsprechend fixieren. Wird oder ist die Wandhülse in eine Wand eingesetzt, so kann die Klemmrippe eine Innenseite der Durchgangsbohrung und/oder der Hülse kontaktieren. Die Wandhülse und/oder die Klemmrippen können eine Oberfläche der Hülse kontaktieren. Es kann vorgesehen sein, dass die Klemmrippe dabei zumindest teilweise verformt wird oder ist, so dass die Klemmkraft weiter verstärkt sein oder werden kann. Es kann vorgesehen sein, dass die Klemmrippe die Wandhülse und das Rohr in der Durchgangsbohrung und/oder der Hülse fixieren kann. Die Klemmrippe kann Wandhülse und Innenseite der Durchgangsbohrung und/oder Hülse form- und/oder kraftschlüssig verbinden und/oder fixieren. Damit kann eine Verschraubung der Wandhülse mit der Wand entfallen, so dass der Mauerkasten und/oder die Wandhülse werkzeuglos montiert werden kann. Es kann sich somit eine einfachere, schnellere und unkompliziertere Montage ergeben. Die Klemmrippe kann zudem eine Dichtungsfunktion aufweisen. Die Klemmrippe kann Innenseite und Außenseite der Wand voneinander isolieren und/oder abdichten. Durch die form- und/oder kraftschlüssige Verbindung zwischen Wandhülse und Rohr kann ebenfalls eine Abdichtung zwischen diesen stattfinden, bzw. Wandhülse und Rohr gegeneinander abgedichtet sein oder werden.

Die Wandhülse kann mindestens drei Klemmrippen aufweisen.

Die Klemmrippen können sich im Wesentlichen senkrecht zu einer Längsachse der Wandhülse auf der Außenseite erstrecken. Die Außenseite kann zumindest abschnittsweise eine im wesentlichen zylindrische Mantelfläche aufweisen.

Mindestens eine Klemmrippen kann in einem der Rohraufnahme zugeordneten Abschnitt der Außenseite angeordnet sein. In einigen Ausführungsformen können mehrere oder alle der Klemmrippen in einem der Rohraufnahme zugeordneten Abschnitt der Außenseite angeordnet sein.

Mindestens eine der Klemmrippen sich derart auf der Außenseite erstrecken, dass sie die Öffnung und/oder die Rohraufnahme vollständig umschließen kann. In einigen Ausführungsformen können mehrere oder alle der Klemmrippen sich derart auf der Außenseite erstrecken, dass sie die Öffnung und/oder die Rohraufnahme vollständig umschließen können.

Die Öffnung kann mindestens eine Rastaufnahme aufweisen. Die Rastaufnahme kann dazu eingerichtet sein, ein Anschlusselement mit der Öffnung zu verbinden.

Die Öffnung kann mindestens zwei Rastaufnahme aufweisen. Die Rastaufnahmen können relativ zueinander unter einem Winkel von zwischen 20 bis 40° angeordnet sein. In einigen Ausführungsformen können die Rastaufnahmen relativ zueinander unter einem Winkel von 30° angeordnet sein.

Der Wandanschlag kann einen an einer der Rohraufnahme abgewandten Kante zumindest abschnittsweise umlaufenden Steg und/oder Kragen aufweisen. Der Steg und/oder Kragen kann die Öffnung zumindest abschnittsweise umschließenden.

Die Wandhülse kann aus einem Kunststoff und/oder Kautschuk bestehen oder aufweisen. Der Kunststoff kann ein LDPE (low density polyethylen) sein oder aufweisen. Der Kunststoff kann ein Thermoplast sein oder aufweisen.

Die Rohraufnahme kann einen Rohranschlag, der eine Einschubtiefe eines Rohrs in die Rohraufnahme festlegen kann, aufweisen. Die Rohraufnahme kann eine Rohraufnahmeninnenkontaktfläche aufweisen. Die Rohraufnahmeninnenkontaktfläche kann dazu eingerichtet sein, bei in die Rohraufnahme aufgenommenen Rohr das Rohr zumindest abschnittsweise zu kontaktieren.

Der Wandanschlag kann mindestens eine Positionierungshilfe aufweisen. Die Positionierungshilfe kann dazu eingerichtet sein, eine Wasserwaage auszurichten und/oder zu stützen.

Die Wandhülse kann eine auf der Außenseite angeordnete Nut aufweisen, Die Nut kann zwischen Öffnung und Rohraufnahme angeordnet sein. Die Nut kann dazu eingerichtet sein, mit einem Eingriffselement, insbesondere einem Eingriffselement einer Hülse, in Verbindung zu treten.

Die Wandhülse kann eine Kabelführung aufweisen, wobei die Kabelführung an oder bei der Außenseite und/oder dem Wandanschlag angeordnet sein kann. In einigen Ausführungsformen kann die Kabelführung eine Perforation und/oder eine Bohrung sein oder aufweisen. Die Wandhülse kann eine oder mehrere Kabeldurchführungen aufweisen. Die Kabeldurchführung kann dazu dienen oder eingerichtet sein, dass ein Kabel, beispielsweise eine Elektrokabel für eine innenliegende Elektroinstallation, durch die Wandhülse hindurchgeführt sein oder werden kann. In einigen Ausführungsformen kann mittels Kabeldurchführung ein Kabel durch eine in eine Wand eingesetzte Wandhülse geführt sein oder werden. Es kann vorgesehen sein, dass die Wandhülse eine nachträgliche Einführung eines Kabels, d.h. nachdem die Wandhülse bereits in die Wand eingebaut oder eingesetzt sein oder werden kann, zu ermöglichen. In einigen Ausführungsformen kann die Wandhülse und/oder die Kabeldurchführung eine Perforation sein oder aufweisen, die durchstochen werden kann, um die Kabeldurchführung und/oder Wandhülse für ein zu verlegendes Kabel zugänglich zu machen. Die Perforation kann an oder bei der Außenseite und/oder dem Wandanschlag angeordnet sein. In einigen Ausführungsformen kann die Positionierungshilfe eine entsprechende Perforation sein oder aufweisen. In einigen Ausführungsformen kann die Kabeldurchführung eine Bohrung durch die Außenseite und/oder den Wandanschlag sein oder aufweisen. In einigen Ausführungsformen kann eine Kabeldurchführung an oder bei der Nut angeordnet sein.Die Wandhülse kann eine Länge von 35 - 100 mm aufweisen. Die Wandhülse kann eine Länge von 70 - 90 mm aufweisen. Die Wandhülse kann eine Länge von 80 mm aufweisen.

Die Außenseite der Wandhülse kann zumindest abschnittsweise einen Durchmesser von 155 mm bis 165 mm aufweisen. Die Außenseite der Wandhülse kann zumindest abschnittsweise einen Durchmesser von 160 mm bis 165 mm aufweisen. Die Außenseite der Wandhülse kann zumindest abschnittsweise einen Durchmesser von 162 mm oder 164 mm aufweisen.Ein zweiter Aspekt der Erfindung betrifft einen Mauerkasten, aufweisend eine vorstehend beschriebene Wandhülse, ein mit der Wandhülse verbundenes und in der Rohraufnahme aufgenommenes Rohr, und eine Außenjalousie, wobei die Außenjalousie mit dem Rohr an einem der Wandaufnahme abgewandten Ende des Rohrs verbunden ist.

Der Mauerkasten kann ein mit der Öffnung verbundenes Anschlusselement aufweisen, so dass ein Fluid durch das Anschlusselement in die Wandhülse einströmen und durch das Rohr und die Außenjalousie ausströmbar sein kann.

Die Außenjalousie kann in das Rohr eingeschoben sein. Die Außenjalousie kann durch eine Lippendichtung mit dem Rohr fixiert sein.

In dem Rohr kann eine Isolationsvorrichtung angeordnet sein, die einen Schließzustand, in dem das Rohr fluidisch gesperrt und/oder thermisch isoliert ist, und einen Öffnungszustand, in dem das Rohr fluidisch und/oder thermisch durchlässig ist, aufweisen kann.

Ein dritter Aspekt der Erfindung betrifft eine Anordnung einer Wand und einem vorstehend beschriebenen Mauerkasten, wobei die Wand eine Durchgangsbohrung aufweist, und wobei die Wandhülse und das Rohr zumindest teilweise in die Durchgangsbohrung eingeschoben sind, wobei der Wandanschlag eine Seite der Wand kontaktiert, und wobei die Klemmrippe eine Innenseite der Durchgangsbohrung kontaktiert. Alternativ oder zusätzlich weist die Anordnung eine in die Durchgangsbohrung eingeschobenen Hülse aufweist, wobei die Wandhülse und das Rohr zumindest teilweise in die Hülse eingeschoben sind, wobei der Wandanschlag eine Seite der Wand und/oder eine Außenseite der Hülse kontaktiert, und wobei die Klemmrippe eine Innenseite der Hülse kontaktiert.

Zwischen Außenjalousie und einer der Außenjalousie zugewandten Seite der Wand kann eine Dichtung angeordnet sein. Die Dichtung kann eine Schaumstoffdichtung sein oder aufweisen.

Die Hülse kann ein Eingriffselement aufweisen. Das Eingriffselement kann in die Nut der Wandhülse eingreifen.

Die Erfindung wird anhand der nachfolgenden Figuren weiter erläutert. Dabei zeigt:
- Fig.1: eine Ausführungsform einer erfindungsgemäßen Wandhülse in einer Seitenansicht;
- Fig. 2: eine Ausführungsform einer erfindungsgemäßen Wandhülse in einer perspektivischen Ansicht; und eine mit einem Rohr verbundene Ausführungsform einer erfindungsgemäßen Wandhülse in einer perspektivischen Ansicht;
- Fig. 3: eine Schnittansicht eines erfindungsgemäßen Mauerkastens mit einer erfindungsgemäßen Wandhülse; und ein Ausschnitt einer erfindungsgemäßen Wandhülse eines Wandanschlagsabschnitts;
- Fig.4: eine seitliche Schnittansicht einer Wand, eines Anschlusselements, einer erfindungsgemäßen Wandhülse und eines Rohrs;
- Fig.5: eine perspektivische Ansicht und zwei Seitenansichten einer in eine Wand eingesetzten Wandhülse und mit dieser verbundenem Anschlusselement; und
- Fig. 6: eine perspektivische Ansicht eines Teils einer erfindungsgemäßen Mauerkastens, in eine Wand eingeschoben und noch nicht vollständig in eine Wand eingeschoben.

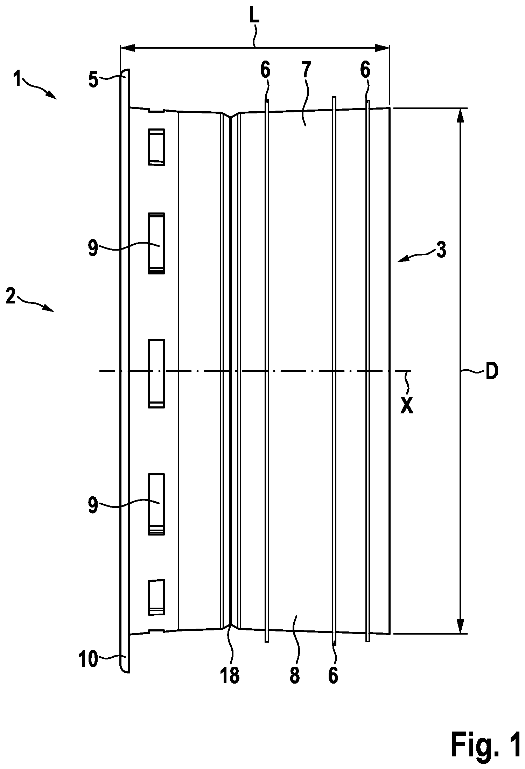

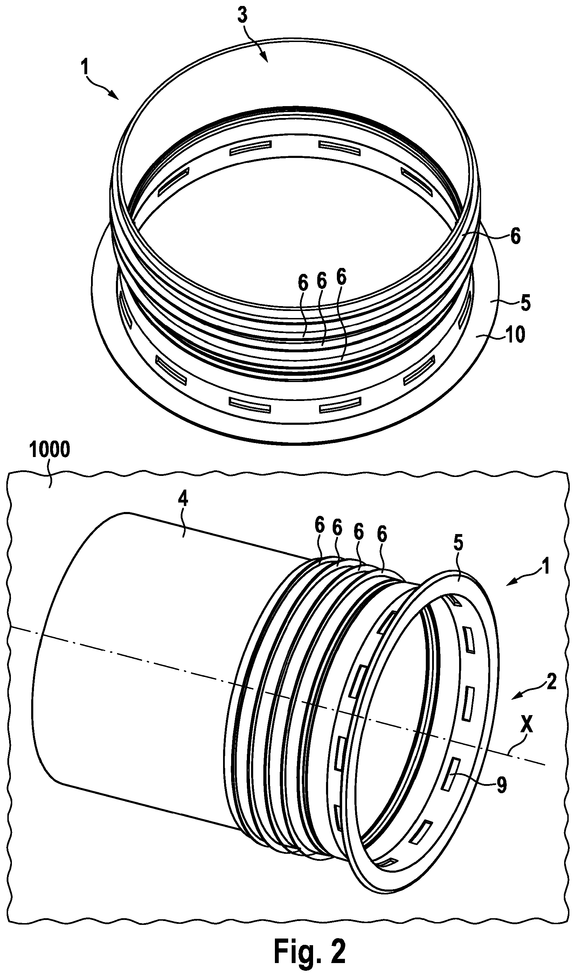

Figur 1 und 2 zeigen Ausführungsformen einer erfindungsgemäßen Wandhülse 1. die Wandhülse 1 weist eine Öffnung 2 auf, durch die Fluid in bzw. durch die Wandhülse einströmen kann. Die Wandhülse 1 weist eine Rohraufnahme 3 auf, in die ein Rohr 4 eingesetzt werden kann. Öffnung 2 und Rohraufnahme 3 sind fluidisch miteinander verbunden. Ist in die Rohraufnahme 3 ein Rohr 4 eingesetzt, so kann durch die Öffnung 2 einströmen des Fluid durch die Wandhülse 1 in das Rohr 4 strömen. Sind Wandhülse 1 und Rohr 4 miteinander verbunden, so kann die Verbindung luftdicht oder im Wesentlichen luftdicht sein.

Die Wandhülse 1 kann einen Wandanschlag 5 aufweisen. Der Wandanschlag 5 kann an oder bei der Öffnung 2 angeordnet sein. Ist die Wandhülse 1 in eine Durchgangsbohrung 1001 einer Wand 1000 und/oder eine Hülse 1002 eingesetzt, so kann der Wandanschlag 5 die Wand 1000 und/oder Hülse 1002 seitlich kontaktieren. Der Wandanschlag 5 kann damit eine Einführtiefe der Wandhülse 1 in der Wand 1000 definieren. Der Wandanschlag 5 kann an einem Rand der Wandhülse 1 angeordnet sein. Der Wandanschlag 5 kann an einem Rand der Öffnung 2 angeordnet sein. Der Wandanschlag 5 kann zumindest abschnittsweise durch einen Steg 10 und/oder einen Kragen gebildet sein. In einigen Ausführungsformen kann Steg 10 und/oder Kragen umlaufend angeordnet sein und/oder beispielsweise Öffnung 2 vollständig umschließen.

An oder Auf einer Außenseite 7 der Wandhülse 1 kann mindestens eine Klemmrippe 6 angeordnet sein. Die Außenseite 7 kann zumindest abschnittsweise im Wesentlichen eine zylindrische Mantelfläche 8 sein oder aufweisen. Die Klemmrippe 6 kann sich im Wesentlichen senkrecht zu einer Längsachse X der Wandhülse 1 erstrecken bzw. verlaufen. In einigen Ausführungsformen kann die Klemmrippe 6 umlaufend auf der Außenseite 7 und/oder Mantelfläche 8 angeordnet sein. In einigen Ausführungsformen kann mindestens eine Klemmrippe 6 die Rohraufnahme 3 und/oder die Öffnung 2 vollständig umschließen. In einigen Ausführungsformen können drei Klemmrippen 6 vorgesehen sein. In einigen Ausführungsformen können mehr als drei Klemmrippen 6, z.B. vier Klemmrippen 6, vorgesehen sein. Mindestens eine, mehrere oder alle der Klemmrippen 6 können im Wesentlichen senkrecht zu oder von der Außenseite 7 und/oder Mantelfläche 8 abstehen.

Ist oder wird die Wandhülse 1 in eine Durchgangsbohrung 1001 einer Wand 1000 und/oder eine in einer Durchgangsbohrung 1001 aufgenommenen Hülse 1002 eingeschoben, so können die Klemmrippen 6 die Wandhülse 1 in der Durchgangsbohrung 1001 und/oder der Hülse 1002 fixieren. In einigen Ausführungsformen kann die Klemmrippe 6 ein Herausrutschen und/oder eine Bewegung der Wandhülse 1 aus der Durchgangsbohrung 1001 bzw. der Hülse 1002 heraus verhindern und/oder zumindest erschweren. Damit kann eine Verschraubung der Wandhülse 1 mit der Wand 1000 entfallen. Wandhülse 1 und/oder Mauerkasten 100 können werkzeuglos montiert werden. Damit kann die Montage erleichtert und schneller durchgeführt sein oder werden.

Es kann vorgesehen sein, dass sich eine oder mehrere der Klemmrippen 6 beim Einschieben der Wandhülse 1 in die Durchgangsbohrung 1001 und/oder Hülse 1002 verformen und/oder verbiegen können, so dass die Fixierung der Wandhülse 1 erhöht sein kann.

In einigen Ausführungsformen kann die Klemmrippe 6 zusätzlich eine Dichtfunktion übernehmen bzw. aufweisen, bzw. fluidisch und/oder thermisch abdichten, und/oder die beiden Seiten der Wand fluidisch und/oder thermisch voneinander isolieren.

Die Öffnung 2 kann mindestens eine Rastaufnahmen 9 aufweisen. Die Rastaufnahmen 9 kann dazu eingerichtet sein, ein Anschlusselement 13 mit dem Wandelement 1 zu verbinden. Beispielsweise kann das Anschlusselement 13 eine Rastnase 19, Clipelement oder dergleichen aufweisen, die mit der Rastaufnahmen 9 verrasten und/oder verclipst sein oder werden kann. Es kann vorgesehen sein, dass Anschlusselement 13 lösbar mit der Rastaufnahmen 9 bzw. dem Wandelement 1 verbunden sein oder werden kann.

Die Wandhülse 1 kann eine Länge L von 35 bis 100 mm aufweisen. In einigen Ausführungsformen kann die Wandhülse 1 eine Länge L von 70 bis 90 mm aufweisen. In einigen Ausführungsformen kann die Länge L 80 mm betragen.

Ein Außendurchmesser D der Wandhülse 1 kann 155 mm bis 165 mm betragen. In einigen Ausführungsformen kann die Wandhülse 1 einen Außendurchmesser D von 155 mm bis 165 mm haben. In einigen Ausführungsformen kann der Durchmesser D 162 mm oder 164 mm betragen. Der Außendurchmesser D kann im Wesentlichen dem Durchmesser eine Durchgangsbohrung 1001 und/oder dem Innendurchmesser einer Hülse 1002 entsprechen.

In einigen Ausführungsformen kann vorgesehen sein, dass sich die Wandhülse 1 zumindest in dem Bereich der Klemmrippen 6 und/oder der Rohraufnahme 3 entgegen einer Einschubrichtung eines Rohrs 4 in die Rohraufnahme 3 konisch aufweitet. Damit kann ein Sitz eines Rohrs 4 in der Rohraufnahme 3 und/oder eine Einführung eines Rohrs 4 in die Rohraufnahme 3 erleichtert bzw. verbessert sein oder werden. In einigen Ausführungsformen kann damit auch die Fixierung der Wandhülse 1 in der Durchgangsbohrung 1001 und/oder der Hülse 1002 verbessert sein oder werden. In einigen Ausführungsformen kann vorgesehen sein, sich die Wandhülse 1 zumindest in dem Bereich der Öffnung 2 konisch in eine Einschubrichtung eines Rohrs 4 in die Rohraufnahme 3 zusammenzieht. Damit kann ein Sitz eines Anschlusselements 13 in der Öffnung 2 und/oder eine Einführung eines Anschlusselements 13 in die Öffnung 2 erleichtert bzw. verbessert sein oder werden.

Wandhülse 1 kann eine Nut 18 aufweisen. Nut 18 kann zwischen Öffnung 2 und Rohraufnahme 3 angeordnet sein. Die Nut 18 kann umlaufend auf der Außenseite 7 angeordnet sein. Die Nut 18 kann dazu eingerichtet sein, die Wandhülse 1 mit einem Eingriffselement 1005 der Hülse 1002 zu verbinden und/oder zu verrasten. Die Verbindung zwischen Eingriffselement 1005 und Nut 18 kann lösbar sein. Damit kann eine Fixierung der Wandhülse 1 in der Hülse 1002 weiter erhöht sein oder werden.

Die Wandhülse 1 kann aus einem Kunststoff bestehen oder einen solchen aufweisen. Die Wandhülse 1 kann aus einem LDPE (low density polyethylen) und/oder einem Thermoplast bestehen oder einen solchen aufweisen. Dadurch kann die Wandhülse 1 leicht und flexibel sein, so dass sie leichter montierbar sein kann.

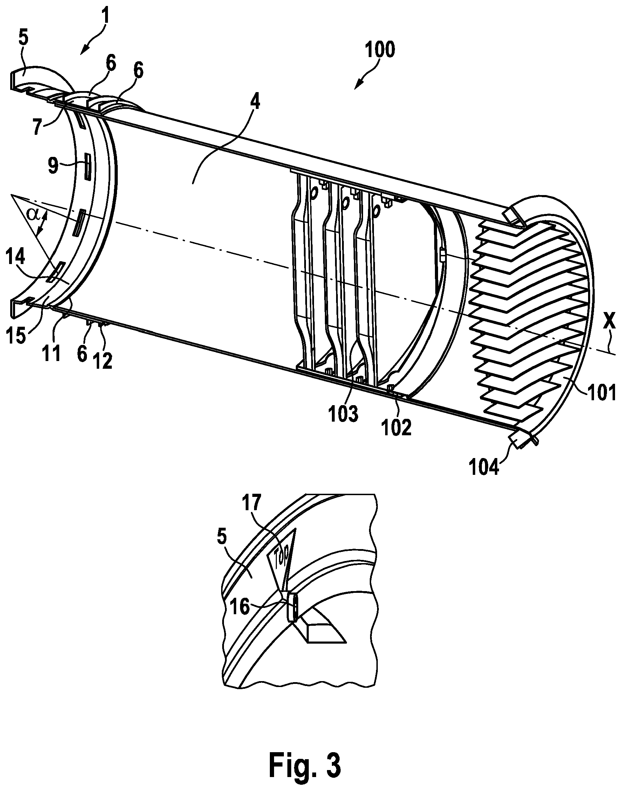

Figur 3 (oben) zeigt eine beispielhafte Ausführungsform eines erfindungsgemäßen Mauerkastens 100 mit einer erfindungsgemäßen Wandhülse 1. Die Wandhülse 1 kann einige, mehrere oder alle Merkmale der oben beschriebenen Wandhülsen 1 aufweisen. Die oben beschriebenen Wandhülsen 1 können zusätzlich einige, mehrere oder alle der weiteren mit Bezug zu Figur 3 beschriebenen Merkmale der Wandhülse 1 aufweisen.

Der Mauerkasten 100 weist ein Rohr 4 auf, dass mit der Wandhülse 1 verbunden ist. Rohr 4 ist in die Rohraufnahme 3 der Wandhülse 1 aufgenommen. An dem der Wandhülse 1 abgelegenen Ende des Rohrs 4 ist eine Außenjalousie 101 mit dem Rohr 4 verbunden.

Die Öffnung 2 kann mehrere Rastaufnahmen 9 aufweisen. Mindestens 2, mehrere oder alle der Rastaufnahmen 9 können zueinander unter einem relativen Winkel von 20 bis 40° angeordnet sein. In einigen Ausführungsformen kann der relative Winkel 30° betragen. Damit kann beispielsweise ein Anschlusselement 13 unter verschiedenen Drehpositionen bzw. unter einem Winkel entsprechend dem relativen Winkel mit der Wandhülse 1 verbunden sein oder werden.

Die Rohraufnahme 3 kann einen Rohranschlag 11 aufweisen. Der Rohranschlag 11 kann eine Einschubtiefe eines Rohrs 4 in die Rohraufnahme 3 festlegen. Ist ein Rohr 4 in die Rohraufnahme 3 aufgenommen, so kann ein Ende des Rohrs 4 den Rohranschlag 11 kontaktieren. Die Rohraufnahme 3 kann eine Rohraufnahmeninnenkontaktfläche 12 aufweisen. Die Rohraufnahmeninnenkontaktfläche 12 kann zumindest abschnittsweise ein Rohr 4 kontaktieren, wenn das Rohr 4 in die Rohraufnahme 3 aufgenommen ist oder wird. In einigen Ausführungsformen kann vorgesehen sein, dass sich die Rohraufnahmeninnenkontaktfläche 12 zumindest abschnittsweise konisch entgegen einer Einschubrichtung eines Rohrs 4 in die Rohraufnahme 3 aufweitet und/oder geneigt ist. Damit kann ein Sitz eines Rohrs 4 in der Rohraufnahme 3 und/oder eine Einführung eines Rohrs 4 in die Rohraufnahme 3 erleichtert bzw. verbessert sein oder werden.

Die Öffnung 2 weist einen Anschlag 14 auf. Der Anschlag 14 legt eine Einschubtiefe eines Anschlusselements 13 in die Öffnung 2 fest. Ist ein Anschlusselement 13 in die Öffnung 2 aufgenommen, so kann ein Ende des Anschlusselements 13 den Anschlag 14 kontaktieren. Die Öffnung 2 weist eine Innenkontaktfläche 15 auf. Die Innenkontaktfläche 15 ist dazu eingerichtet, zumindest abschnittsweise ein Anschlusselement 13 zu kontaktieren, wenn das Anschlusselement 13 in die Öffnung 2 aufgenommen ist oder wird. In einigen Ausführungsformen kann vorgesehen sein, dass sich die Innenkontaktfläche 15 zumindest abschnittsweise konisch in eine Einschubrichtung eines

Anschlusselements 13 in die Öffnung 2 aufweitet und/oder geneigt ist. Damit kann ein Sitz eines Anschlusselements 13 in der Öffnung 2 und/oder eine Einführung eines Anschlusselement 13 in die Öffnung 2 erleichtert bzw. verbessert sein oder werden.

In dem Rohr 4 kann eine Isolationsvorrichtung 103 angeordnet sein. Die Isolationsvorrichtung 103 kann dazu eingerichtet sein, das Rohr 4 in einem Schließzustand fluidisch und/oder thermisch zu sperren. Die Isolationsvorrichtung 103 kann dazu eingerichtet sein, in einem Öffnungszustand Fluid und/oder Wärme durch das Rohr zu lassen.

Die Außenjalousie 101 kann in das Rohr 4 eingeschoben sein. Eine Lippendichtung 102 kann zwischen Außenjalousie 101 und Rohr 4 angeordnet sein, um eine Dichtung am Übergang von Rohr 4 zur Außenjalousie 101 zu gewährleisten. Es kann vorgesehen sein, dass Außenjalousie 101 durch die Lippendichtung 102 mit dem Rohr 4 verklemmt und/oder fixiert ist.

Die in Figur 3 gezeigte untere Darstellung zeigt eine Vergrößerung eines Ausschnitts des Wandanschlag 5.Wandanschlag 5 kann mindestens eine Positionierungshilfe 16 aufweisen. Positionierungshilfe 16 kann sich im Wesentlichen senkrecht von dem Wandanschlag 5 erstrecken und/oder erheben. Positionierungshilfe 16 kann dazu dienen, eine Wasserwaage zu stützen bzw. einen Punkt und/oder Auflagepunkt für eine Wasserwaage bereitzustellen. Wandanschlag 5 kann alternativ oder zusätzlich mindestens eine Markierung 17 aufweisen, die beispielsweise eine Drehung der Wandhülse 1 um ihre Längsachse X anzeigen kann.

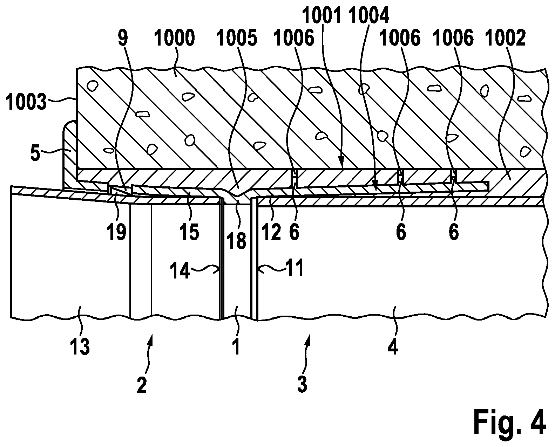

Figur 4 zeigt einen Querschnitt eines Teils einer Anordnung aus einem Mauerkasten 100 und einer Wand 1000. Der Mauerkasten 100 kann einige, mehrere oder alle der oben beschriebenen und gezeigten Merkmale eines Mauerkastens 100 aufweisen. Die vorstehend beschriebenen Mauerkasten können einige, mehrere oder alle Merkmale des Mauerkastens 100 der Figur 4 aufweisen.

Die Wand 1000 kann eine Durchgangsbohrung 1001 aufweisen, bzw. die Durchgangsbohrung 1001 durch die Wand 1000 verlaufen. Die Durchgangsbohrung 1001 kann sich von einer Seite 1003 der Wand zu der gegenüberliegenden Seite erstrecken. Die Durchgangsbohrung 1001 kann sich durch die Wand 1000 hindurch erstrecken, und/oder die einander gegenüberliegenden Seiten der Wand 1000 fluidisch miteinander verbinden.

In einigen Ausführungsformen kann eine Hülse 1002 in die Durchgangsbohrung 1001 eingeschoben sein oder werden. Die Hülse 1002 kann eine Hülsenaufnahme 1004 aufweisen, in die die Wandhülse 1 eingeschoben sein oder werden kann. Wandhülse 1 und/oder ein mit Wandhülse 1 verbundenes Rohr 4 kann in die Hülse 1002 eingeschoben sein oder werden. Ist ein Rohr 4 eingeschoben, so kann sich das Rohr 4 bis zu der der Seite 1003 gegenüberliegenden Seite erstrecken und/oder aus dieser herausragen.

Es kann vorgesehen sein, das Rohr 4 zumindest abschnittsweise die Hülse 1002 kontaktieren kann. Es kann vorgesehen sein, dass die Wandhülse 1 die Hülsenaufnahme 1004 und/oder die Hülse 1002 zumindest abschnittsweise kontaktieren kann. Mindestens eine der Klemmrippen 6 kann die Hülse 1002 bzw. Hülsenaufnahme 1004 kontaktieren und die Wandhülse 1 mit Hülse 1002 und/oder Hülsenaufnahme 1004 fixieren. In einigen Ausführungsformen kann die Hülsenaufnahme 1004 mit der Wandhülse 1 verrasten. Die Hülse 1002 kann ein Eingriffselement 1005 aufweisen, das in Nut 18 der Wandhülse 1 eingreifen und/oder in diesem aufgenommen sein kann. Mindestens eine der Klemmrippen 6 kann die Wandhülse 1 mit oder in der Hülse 1002 und/oder der Hülsenaufnahme 1004 fixieren.

In einigen Ausführungsformen kann die Hülse 1002 und/oder die Hülsenaufnahme 1004 mindestens eine Klemmrippenaufnahme 1006 aufweisen. In einigen Ausführungsformen kann die Hülse 1002 und/oder die Hülsenaufnahme 1004 eine der Anzahl Klemmrippen 6 der Wandhülse 1 entsprechende Anzahl Klemmrippenaufnahmen 1006 aufweisen. Die Klemmrippenaufnahme 1006 kann derart angeordnet sein, dass bei in die Hülse 1002 und/oder Hülsenaufnahme 1004 eingeführten Wandhülse 1 die Klemmrippe 6 der Wandhülse 1 in der Klemmrippenaufnahme 1006 aufgenommen sein kann. In einigen Ausführungsformen kann die Klemmrippenaufnahme 1006 derart dimensioniert sein, dass eine in die Klemmrippenaufnahme 1006 aufgenommene Klemmrippe 6 ohne Verformung und/oder Verbiegung aufgenommen sein kann und/oder Platz finden kann. In einigen Ausführungsformen kann die Klemmrippenaufnahme 1006 derart dimensioniert sein, dass eine in die Klemmrippenaufnahme 1006 aufgenommene Klemmrippe 6 nur unter Verformung und/oder Verbiegung aufgenommen sein kann und/oder Platz finden kann. In einigen Ausführungsformen kann die Hülse 1002 und/oder die Hülsenaufnahme 1004 keine Klemmrippenaufnahme 1006 oder eine verglichen mit der Anzahl Klemmrippen 6 der Wandhülse 1 geringere Anzahl Klemmrippen Aufnahmen 1006 aufweisen.

Ein mit der Wandhülse 1 verbundenes Anschlusselement 13 kann eine oder mehrere Rastnasen 19 aufweisen. Die Rastnase 19 kann in die Rastaufnahmen 9 eingreifen, wenn Anschlusselement 13 in der Öffnung 2 aufgenommen ist. Ist ein Anschlusselement 13 in der Öffnung 2 aufgenommen, so kann vorgesehen sein, dass ein Ende des Anschlusselements 13 den Anschlag 14 der Öffnung 2 kontaktieren kann.

In einigen Ausführungsformen kann auf eine Hülse 1002 verzichtet sein oder werden. In diesen Fällen kann Wandhülse 1 und/oder Rohr 4 zumindest abschnittsweise eine Innenfläche der Durchgangsbohrung 1001 der Wand 1000 kontaktieren. Mindestens eine der Klemmrippen 6 der Wandhülse 1 kann eine Innenfläche der durch Führungsbohrung 1001 kontaktieren, so dass die Wandhülse 1 in oder mit der Durchgangsbohrung 1001 fixiert sein kann.

Ist eine Wandhülse 1 in der Durchgangsbohrung 1001 und/oder der Hülse 1002 aufgenommen bzw. eingeschoben, so kann vorgesehen sein, dass der Wandanschlag 5 eine Seite 1003 der Wand 1000 und/oder der Hülse 1002 kontaktiert.

Bei der Anordnung aus Mauerkasten 100 und Wand 1000 kann die Außenjalousie 101 an einem der Seite 1003 der Wand 1000 von der abgewandten Seite der Wand 1000 herausragenden Ende des Rohrs 4 angeordnet sein (nicht in der Figur gezeigt).

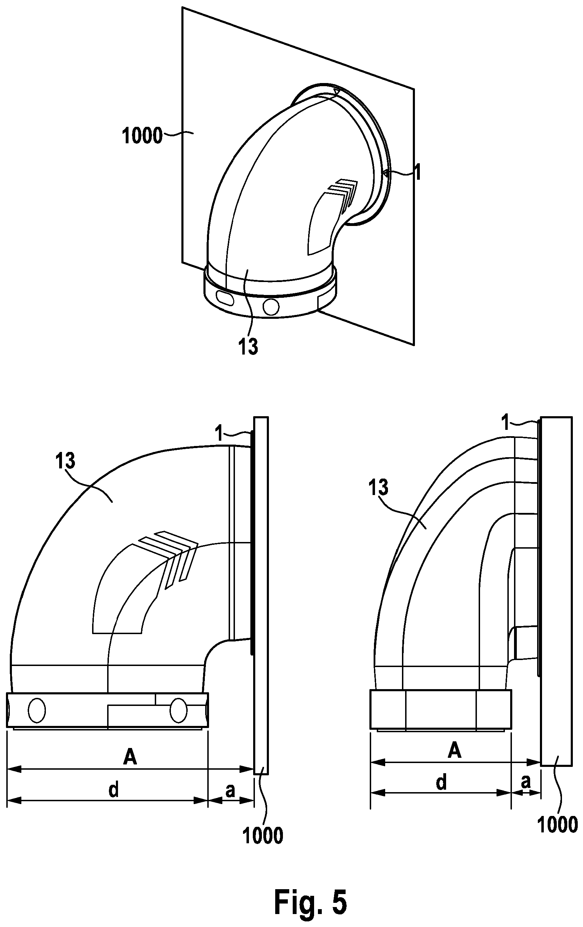

Figur 5 zeigt in eine Wand 1000 eingesetzte Wandhülsen 1. Mit der Wandhülse ist ein Anschlusselement 13 verbunden. Das Anschlusselement 13 kann beispielsweise ein Rohrbogen, ein Umlenkstück, ein Rohrstück und/oder ein Querschnittsadapter sein oder aufweisen.

Da die Wandhülse 1 fast vollständig in die Wand 1000 bzw. Durchgangsbohrung 1001 und/oder Hülse 1002 eingeschoben sein kann, und/oder. nur der Wandanschlag 5 aus der Wand 1000 herausragen kann ein Abstand A, der von der Wand 1000 ausgehend zur Montage des Anschlusselements 13 notwendig sein kann bzw. freigehalten werden muss, reduziert sein oder werden. Der Abstand A kann im Wesentlichen der Summe eines Querschnitts d des Anschlusselements 13 und eines Abstand a des Umlenkbereichs des Anschlusselements 13 entsprechen. In einigen Ausführungsformen kann der Abstand a im Wesentlichen gleich den aus der Wand 1000 herausragenden Teil eines Schenkels des Umlenkstücks 13 entsprechen.

In einigen Ausführungsformen kann der Durchmesser d des Anschlusselements 13 zwischen 80 mm und 200 mm betragen. In einigen Ausführungsformen kann der Durchmesser d des Anschlusselements 13 zwischen 150 und 170 mm, beispielsweise 163 mm betragen. In einigen Ausführungsformen kann der Durchmesser d des Anschlusselements 13 zwischen 90 mm und 110 mm, beispielsweise 100 mm betragen.

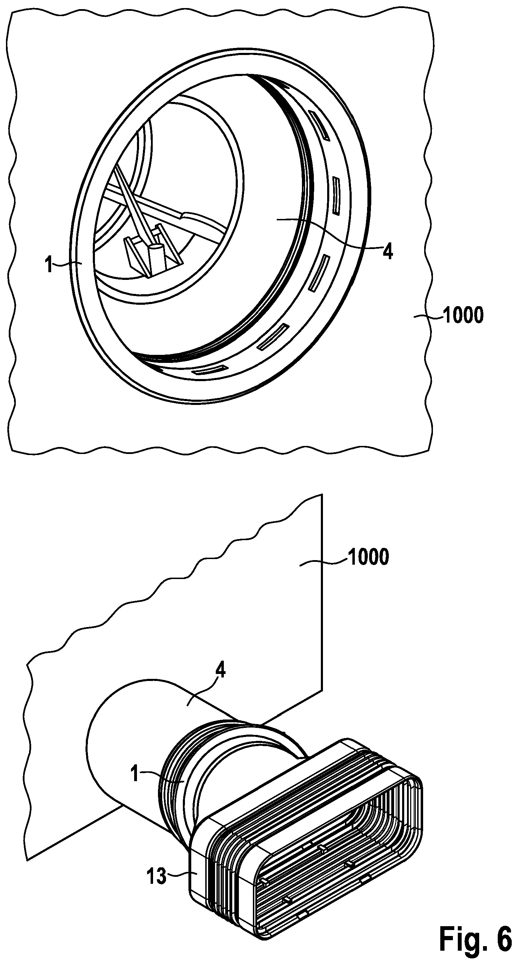

Figur 6 zeigt einen in eine Wand 1000 eingesetzten Mauerkasten 100 mit einer Wandhülse 1 und einem mit der Wandhülse 1 verbundenen Rohr 4. Wie insbesondere in Figur 6 oben ersichtlich ist, sind keine Verschraubungen der Wandhülse 1 mit der Wand 1000 notwendig, um die Wandhülse 1 und/oder den Mauerkasten 100 in der Wand 1000 zu fixieren. Figur 6 unten zeigt eine weitere Ansicht eines Mauerkastens 100 und mit einem mit der Wandhülse 1 verbundenen Anschlusselement 13. Das Anschlusselement 13 kann ein Querschnittsadapter sein. Der Querschnittsadapter kann beispielsweise einen eckigen und/oder flachen Querschnitt auf einen Rundquerschnitt ändern.

Die Montage eines Mauerkasten kann folgende Schritte umfassen:
1. Messen der Wanddicke einer Wand 1000 und bestimmen einer benötigten Rohrlänge. Die benötigte Rohrlänge kann beispielsweise aus der Differenz aus gemessener Wanddicke und Einschubtiefe der Rohraufnahme 3 berechnet werden. Ist beispielsweise die Wand 70 cm dick und hat die Rohraufnahme 3 der Wandhülse 1 eine Einschubtiefe von 40 cm, so kann die Rohrlänge im Wesentlichen 30 cm betragen. In einigen Ausführungsformen kann die Rohrlänge etwas größer gewählt sein oder werden, so dass das Rohr 4 aus der der Wandhülse 1 abgewandten Seite der Wand 1000 herausragen kann.
2. Zuschneiden des Rohrs 4 auf die bestimmte Rohrlänge.
3. Einschieben des Rohrs 4 in die Rohraufnahme 3.
4. Einschieben der Wandhülse 1 und Rohr 4 in eine Durchgangsbohrung 101 der Wand. Beispielsweise kann die Wandhülse 1 und Rohr 4 innenseitig bzw. aus Richtung einer Innenseite 1003 bzw. einer Innenseite zugewandter Seite 1003 der Wand 1000 eingeschoben werden. In einigen Fällen unter Kraftaufbringung mittels Gummihammer.
5. Gegebenenfalls Unterbrechung der Montage und Warten, bis z.B. eine Fassade oder Innenfläche fertig sind. Zum Schutz vor Schmutz können beidseitig Styropordeckel eingesetzt werden, z.B. auf oder in die Wandhülse 1 und/oder das der Wandhülse 1 abgewandte Rohrende.
6. Ggf. positionieren der Isolationsvorrichtung 103 in dem Rohr 4. Dazu kann beispielsweise die Isolationsvorrichtung 103 von der innenseitigen Seite 1003 der Wand 1000 durch die Wandhülse 1 in das Rohr 4 eingeschoben werden.
7. Dämmung zwischen Rohr 4 und Wand 1000, z.B. von außen bzw. außenseitig.
8. Befestigen der Außenjalousie 101 an dem der Wandhülse 1 abgewandten Rohrende.

Die Montage kann vorteilhafterweise werkzeuglos erfolgen. Damit kann die Montage sehr schnell durchgeführt sein oder werden. Die Wandhülse 1 und/oder das Rohr 4 kann durch die Klemmrippe 6 fest an und/oder mit der Wand 1000 verbunden sein oder werden. Zudem können Warte- und Trocknungszeiten bei der Montage entfallen, da ein Einkleben des Rohres 4 später erfolgen kann.

Die Montage bis zur Wand 1000 kann z.B. durch einen Küchenmonteur erfolgen, wobei die Jalousie 101 später durch den Abnehmer bzw. Inhaber nach Fertigstellung der Fassade erfolgen kann. Bis zur endgültigen Fertigstellung kann die Wandhülse 1 und/oder das Rohr 4 durch einen Deckel, z.B. einen Styropordeckel, abgedeckt sein oder werden.

Wandhülse 1 und Rohr 4 können luftdicht miteinander verbunden sein. Zudem können geringe zusätzliche Aufbauhöhen bei eingesetzten Formteilen und/oder Anschlusselementen 13 ermöglicht sein oder werden. Wenn die Wandhülse 1 aus LPDE besteht oder ein solches aufweist, kann sie leicht und flexibel sein, so dass die Montage erleichtert sein oder werden kann.

### Bezugszeichenliste

| | |
|---|---|
| Wandhülse | 1 |
| Öffnung | 2 |
| Rohraufnahme | 3 |
| Rohr | 4 |
| Wandanschlag | 5 |
| Klemmrippe | 6 |
| Außenseite | 7 |
| Mantelfläche | 8 |
| Rastaufnahme | 9 |
| Steg | 10 |
| Rohranschlag | 11 |
| Innenkontaktfläche | 12 |
| Anschlusselement | 13 |
| Anschlag | 14 |
| Innenkontaktfläche | 15 |
| Positionierungshilfe | 16 |
| Markierung | 17 |
| Nut | 18 |
| Rastnase | 19 |
| Mauerkasten | 100 |
| Außenjalousie | 101 |
| Lippendichtung | 102 |
| Isolationsvorrichtung | 103 |
| Dichtung | 104 |
| Wand | 1000 |
| Durchgangsbohrung | 1001 |
| Hülse | 1002 |
| Seite | 1003 |
| Hülsenaufnahme | 1004 |
| Eingriffselement | 1005 |
| Klemmrippenaufnahme | 1006 |
| Längsachse | X |
| Winkel | α |
| Länge | L |
| Durchmesser | D |
| Abstand | A |
| Abstand | a |
| Durchmesser | d |

## Patentansprüche

1. Wandhülse (1) für einen Mauerkasten (100), wobei die Wandhülse (1) eine Öffnung (2) zum Einströmen eines Fluids und eine mit der Öffnung (2) fluidisch verbundene Rohraufnahme (3) aufweist, die dazu eingerichtet ist, ein Rohr (4) aufzunehmen, so dass, wenn ein Rohr (4) in der Rohraufnahme (3) aufgenommen ist, Fluid von der Öffnung (2) in das Rohr (4) einströmen kann, wobei die Wandhülse (1) einen Wandanschlag (5) aufweist, der an einer der Rohraufnahme (3) abgewandten Seite der Wandhülse (1) angeordnet ist, so dass der Wandanschlag (5) eine Einschubtiefe der Wandhülse (1) festlegt, wobei die Wandhülse (1) mindestens eine Klemmrippe (6), bevorzugt mindestens drei Klemmrippen (6) aufweist, die an einer Außenseite (7) der Wandhülse (1) angeordnet ist und sich zumindest abschnittsweise entlang der Außenseite (7) erstreckt, **dadurch gekennzeichnet, dass** die Öffnung (2) dazu eingerichtet ist, ein Anschlusselement (13) aufzunehmen, und wobei die Öffnung (2) einen Anschlag (14), der eine Einschubtiefe eines Anschlusselements (13) in die Öffnung (2) festlegt, und eine Innenkontaktfläche (15) aufweist, wobei die Innenkontaktfläche (15) dazu eingerichtet ist, bei in die Öffnung (2) aufgenommenen Anschlusselement (13) das Anschlusselement (13) zumindest abschnittsweise zu kontaktieren.

2. Wandhülse (1) nach Anspruch 1, bei der sich die Klemmrippen (6) im Wesentlichen senkrecht zu einer Längsachse der Wandhülse (1) auf der Außenseite (7) erstrecken, bevorzugt die Öffnung (2) und/oder die Rohraufnahme (3) vollständig umschließen, wobei bevorzugt die Außenseite (7) zumindest abschnittsweise eine im wesentlichen zylindrische Mantelfläche aufweist, und/oder mindestens eine Klemmrippe (6) an, bei oder über der Rohraufnahme (3) an der Außenseite (7) angeordnet ist.

3. Wandhülse (1) nach einem der vorangegangenen Ansprüche, bei der die Öffnung (2) Rastaufnahmen aufweist, die dazu eingerichtet sind, ein Anschlusselement (13) mit der Öffnung (2) zu verbinden wobei bevorzugt die Rastaufnahmen relativ zueinander unter einem Winkel (30) von zwischen 20 bis 40°, besonders bevorzugt 30°, angeordnet sind.

4. Wandhülse (1) nach einem der vorangegangenen Ansprüche, bei der der Wandanschlag (5) einen an einer der Rohraufnahme (3) abgewandten Kante zumindest abschnittsweise umlaufender und/oder die Öffnung (2) umschließender Steg und/oder Kragen aufweist.

5. Wandhülse (1) nach einem der vorangegangenen Ansprüche, bei der die Rohraufnahme (3) einen Rohranschlag (11), der eine Einschubtiefe eines Rohrs (4) in die Rohraufnahme (3) festlegt, und eine Rohraufnahmeninnenkontaktfläche (12) aufweist, wobei die Rohraufnahmeninnenkontaktfläche (12) dazu eingerichtet ist, bei in die Rohraufnahme (3) aufgenommenem Rohr (4) das Rohr (4) zumindest abschnittsweise zu kontaktieren.

6. Wandhülse (1) nach einem der vorangegangenen Ansprüche, die eine Länge (L) von 35 - 100 mm, bevorzugt 70 - 90 mm, besonders bevorzugt 80 mm, aufweist, und/oder wobei die Außenseite (7) der Wandhülse (1) zumindest abschnittsweise einen Durchmesser (D) von 155 mm bis 165 mm, bevorzugt 160 mm bis 165 mm, besonders bevorzugt 162 mm oder 164 mm, hat.

7. Wandhülse (1) nach einem der vorangegangenen Ansprüche, die eine auf der Außenseite (7) angeordnete Nut (18) aufweist, wobei bevorzugt die Nut (18) zwischen Öffnung (2) und Rohraufnahme (3) angeordnet ist, wobei bevorzugt die Nut (18) dazu eingerichtet ist, mit einem Eingriffselement (1005) in Verbindung zu treten.

8. Wandhülse (1) nach einem der vorangegangenen Ansprüche, die eine Kabelführung aufweist, wobei die Kabelführung an oder bei der Außenseite (7) und/oder dem Wandanschlag (5) angeordnet ist, wobei bevorzugt die Kabelführung eine Perforation und/oder eine Bohrung ist oder aufweist.

9. Mauerkasten (100), aufweisend eine Wandhülse (1) nach einem der vorangegangenen Ansprüche 1 bis 8, ein mit der Wandhülse (1) verbundenes und in der Rohraufnahme (3) aufgenommenes Rohr (4), und eine Außenjalousie (101), wobei die Außenjalousie (101) mit dem Rohr (4) an einem der Wandaufnahme abgewandten Ende des Rohrs (4) verbunden ist.

10. Mauerkasten (100) nach Anspruch 9, bei dem die Außenjalousie (101) in das Rohr (4) eingeschoben ist und durch eine Lippendichtung (102) mit dem Rohr (4) fixiert ist.

11. Mauerkasten (100) nach einem der vorangegangenen Ansprüche 9 oder 10, bei dem in dem Rohr (4) eine Isolationsvorrichtung (103) angeordnet ist, die einen Schließzustand, in dem das Rohr (4) fluidisch gesperrt und/oder thermisch isoliert ist, und einen Öffnungszustand, in dem das Rohr (4) fluidisch und/oder thermisch durchlässig ist, aufweist.

12. Anordnung einer Wand (1000) und eines Mauerkastens (100) nach einem der vorangegangenen Ansprüche 9 bis 11, wobei die Wand (1000) eine Durchgangsbohrung (1001) aufweist,
wobei die Wandhülse (1) und das Rohr (4) zumindest teilweise in die Durchgangsbohrung (1001) eingeschoben sind, wobei der Wandanschlag (5) eine Seite der Wand (1000) kontaktiert, und wobei die Klemmrippe (6) eine Innenseite der Durchgangsbohrung (1001) kontaktiert,
und/oder wobei die Anordnung eine in die Durchgangsbohrung (1001) eingeschobenen Hülse (1002) aufweist, wobei die Wandhülse (1) und das Rohr (4) zumindest teilweise in die Hülse (1002) eingeschoben sind, wobei der Wandanschlag (5) eine Seite der Wand (1000) und/oder eine Außenseite (7) der Hülse (1002) kontaktiert, und wobei die Klemmrippe (6) eine Innenseite der Hülse (1002) kontaktiert.

13. Anordnung nach Anspruch 12, bei der zwischen Außenjalousie (101) und einer der Außenjalousie (101) zugewandten Seite der Wand (1000) eine Dichtung, bevorzugt eine Schaumstoffdichtung, angeordnet ist.

14. Anordnung nach einem der vorangegangenen Ansprüche 12 oder 13, bei der die Hülse (1002) ein Eingriffselement (1005) aufweist, dass in eine oder die Nut (18) der Wandhülse (1) eingreift.

## Claims

1. Wall sleeve (1) for a wall box (100), wherein the wall sleeve (1) has an opening (2) for the inflow of a fluid and a pipe receptacle (3) which is fluidically connected to the opening (2) and which is configured to receive a pipe (4), such that, when a pipe (4) is received in the pipe receptacle (3), fluid can flow from the opening (2) into the pipe (4), wherein the wall sleeve (1) has a wall stop (5) which is arranged on a side of the wall sleeve (1) facing away from the pipe receptacle (3), such that the wall stop (5) defines an insertion depth of the wall sleeve (1), wherein the wall sleeve (1) has at least one clamping rib (6), preferably at least three clamping ribs (6), which is arranged on an outer side (7) of the wall sleeve (1) and extends at least in sections along the outer side (7), **characterized in that** the opening (2) is configured to receive a connection element (13), and wherein the opening (2) has a stop (14) which defines an insertion depth of a connection element (13) into the opening (2), and an inner contact surface (15), wherein the inner contact surface (15) is configured to contact the connection element (13) at least in sections when the connection element (13) is received in the opening (2).

2. Wall sleeve (1) according to claim 1, in which the clamping ribs (6) extend substantially perpendicularly to a longitudinal axis of the wall sleeve (1) on the outer side (7), preferably completely enclose the opening (2) and/or the pipe receptacle (3), wherein preferably the outer side (7) has at least in sections a substantially cylindrical lateral surface, and/or at least one clamping rib (6) is arranged on, at or above the pipe receptacle (3) on the outer side (7).

3. Wall sleeve (1) according to one of the preceding claims, in which the opening (2) has latching receptacles which are configured to connect a connection element (13) to the opening (2), wherein preferably the latching receptacles are arranged relative to one another at an angle (30) of between 20 to 40°, particularly preferably 30°.

4. Wall sleeve (1) according to one of the preceding claims, in which the wall stop (5) has a web and/or collar which runs around at least in sections on an edge facing away from the pipe receptacle (3) and/or encloses the opening (2).

5. Wall sleeve (1) according to one of the preceding claims, in which the pipe receptacle (3) has a pipe stop (11) which defines an insertion depth of a pipe (4) into the pipe receptacle (3), and a pipe receptacle inner contact surface (12), wherein the pipe receptacle inner contact surface (12) is configured to contact the pipe (4) at least in sections when the pipe (4) is received in the pipe receptacle (3).

6. Wall sleeve (1) according to one of the preceding claims, which has a length (L) of 35-100 mm, preferably 70-90 mm, particularly preferably 80 mm, and/or wherein the outer side (7) of the wall sleeve (1) has at least in sections a diameter (D) of 155 mm to 165 mm, preferably 160 mm to 165 mm, particularly preferably 162 mm or 164 mm.

7. Wall sleeve (1) according to one of the preceding claims, which has a groove (18) arranged on the outer side (7), wherein preferably the groove (18) is arranged between the opening (2) and the pipe receptacle (3), wherein preferably the groove (18) is configured to come into contact with an engagement element (1005).

8. Wall sleeve (1) according to one of the preceding claims, which has a cable guide, wherein the cable guide is arranged on or at the outer side (7) and/or the wall stop (5), wherein preferably the cable guide is or has a perforation and/or a bore.

9. Wall box (100), having a wall sleeve (1) according to one of the preceding claims 1 to 8, a pipe (4) connected to the wall sleeve (1) and received in the pipe receptacle (3), and an outer blind (101), wherein the outer blind (101) is connected to the pipe (4) at an end of the pipe (4) facing away from the wall receptacle.

10. Wall box (100) according to claim 9, in which the outer blind (101) is inserted into the pipe (4) and is fixed to the pipe (4) by a lip seal (102).

11. Wall box (100) according to one of the preceding claims 9 or 10, in which an insulation device (103) is arranged in the pipe (4), which insulation device has a closed state, in which the pipe (4) is fluidically blocked and/or thermally insulated, and an open state, in which the pipe (4) is fluidically and/or thermally permeable.

12. Assembly of a wall (1000) and a wall box (100) according to one of the preceding claims 9 to 11, wherein the wall (1000) has a through-bore (1001),
wherein the wall sleeve (1) and the pipe (4) are at least partially inserted into the through-bore (1001), wherein the wall stop (5) contacts a side of the wall (1000), and wherein the clamping rib (6) contacts an inner side of the through-bore (1001),
and/or wherein the assembly has a sleeve (1002) inserted into the through-bore (1001), wherein the wall sleeve (1) and the pipe (4) are at least partially inserted into the sleeve (1002), wherein the wall stop (5) contacts a side of the wall (1000) and/or an outer side (7) of the sleeve (1002), and wherein the clamping rib (6) contacts an inner side of the sleeve (1002).

13. Assembly according to claim 12, in which a seal, preferably a foam seal, is arranged between the outer blind (101) and a side of the wall (1000) facing the outer blind (101).

14. Assembly according to one of the preceding claims 12 or 13, in which the sleeve (1002) has an engagement element (1005) which engages in a or the groove (18) of the wall sleeve (1).

## Revendications

1. Douille murale (1) pour un boîtier mural (100), la douille murale (1) présentant une ouverture (2) pour l'entrée d'un fluide et un logement de tube (3) relié de manière fluidique à l'ouverture (2), qui est conçu pour recevoir un tube (4) de telle sorte que, lorsqu'un tube (4) est logé dans le logement de tube (3), le fluide puisse s'écouler de l'ouverture (2) dans le tube (4), la douille murale (1) présentant une butée murale (5) qui est agencée sur un côté de la douille murale (1) opposé au logement de tube (3), de sorte que la butée murale (5) détermine une profondeur d'insertion de la douille murale (1), la douille murale (1) présentant au moins une nervure de serrage (6), de préférence au moins trois nervures de serrage (6) qui sont agencées sur un côté extérieur (7) de la douille murale (1) et s'étendent au moins par sections le long du côté extérieur (7), **caractérisée en ce que** l'ouverture (2) est conçue pour recevoir un élément de raccordement (13) et l'ouverture (2) présente une butée (14) qui définit une profondeur d'insertion d'un élément de raccordement (13) dans l'ouverture (2) et une surface de contact intérieure (15), la surface de contact intérieure (15) étant conçue pour entrer en contact avec l'élément de raccordement (13) au moins par sections lorsque l'élément de raccordement (13) est logé dans l'ouverture (2).

2. Douille murale (1) selon la revendication 1, dans laquelle les nervures de serrage (6) s'étendent essentiellement perpendiculairement à un axe longitudinal de la douille murale (1) sur le côté extérieur (7), de préférence entourent complètement l'ouverture (2) et/ou le logement de tube (3), le côté extérieur (7) présentant de préférence au moins par sections une surface d'enveloppe essentiellement cylindrique, et/ou au moins une nervure de serrage (6) étant agencée sur le côté extérieur (7) au niveau ou au-dessus du logement de tube (3).

3. Douille murale (1) selon l'une des revendications précédentes, dans laquelle l'ouverture (2) présente des logements d'encliquetage qui sont conçus pour relier un élément de raccordement (13) à l'ouverture (2), les logements d'encliquetage étant de préférence agencés les uns par rapport aux autres selon un angle (30) compris entre 20 et 40°, de préférence 30°.

4. Douille murale (1) selon l'une des revendications précédentes, dans laquelle la butée murale (5) présente une nervure et/ou un collet s'étendant au moins par sections sur un bord opposé à l'un des logements de tube (3) et/ou entourant l'ouverture (2).

5. Douille murale (1) selon l'une des revendications précédentes, dans laquelle le logement de tube (3) présente une butée de tube (11) qui définit une profondeur d'insertion d'un tube (4) dans le logement de tube (3) et une surface de contact intérieure (12) pour le tube, la surface de contact intérieure (12) pour le tube étant conçue pour entrer en contact avec le tube (4) au moins par sections lorsque le tube (4) est logé dans le logement de tube (3).

6. Douille murale (1) selon l'une des revendications précédentes, qui présente une longueur (L) de 35 à 100 mm, de préférence de 70 à 90 mm, de préférence de 80 mm, et/ou dans laquelle le côté extérieur (7) de la douille murale (1) présente, au moins par sections, un diamètre (D) de 155 mm à 165 mm, de préférence de 160 mm à 165 mm, de préférence de 162 mm ou de 164 mm.

7. Douille murale (1) selon l'une des revendications précédentes, qui présente une rainure (18) agencée sur le côté extérieur (7), la rainure (18) étant de préférence agencée entre l'ouverture (2) et le logement de tube (3), la rainure (18) étant de préférence conçue pour entrer en contact avec un élément d'engagement (1005).

8. Douille murale (1) selon l'une des revendications précédentes qui présente un guide-câble, le guide-câble étant agencé sur ou près du côté extérieur (7) et/ou de la butée murale (5), le guide-câble étant ou présentant de préférence une perforation et/ou un alésage.

9. Boîtier mural (100) comprenant une douille murale (1) selon l'une des revendications 1 à 8 précédentes, un tube (4) relié à la douille murale (1) et logé dans le logement de tube (3), et un store extérieur (101), le store extérieur (101) étant relié au tube (4) à une extrémité du tube (4) opposée au logement mural.

10. Boîtier mural (100) selon la revendication 9, dans laquelle le store extérieur (101) est inséré dans le tube (4) et est fixé au tube (4) par un joint à lèvre (102).

11. Boîtier mural (100) selon l'une des revendications 9 ou 10 précédentes, dans laquelle un dispositif d'isolation (103) est agencé dans le tube (4), lequel présente un état fermé dans lequel le tube (4) est bloqué sur le plan fluidique et/ou isolé thermiquement et un état ouvert, dans lequel le tube (4) est perméable sur le plan fluidique et/ou thermique.

12. Agencement comprenant une paroi (1000) et un boîtier mural (100) selon l'une des revendications 9 à 11 précédentes, la paroi (1000) présentant un alésage traversant (1001), la douille murale (1) et le tube (4) étant au moins partiellement insérés dans le trou traversant (1001), la butée murale (5) étant en contact avec un côté du mur (1000) et la nervure de serrage (6) étant en contact avec un côté intérieur du trou traversant (1001), et/ou l'agencement comprenant une douille (1002) insérée dans le trou traversant (1001), la douille murale (1) et le tube (4) étant au moins partiellement insérés dans la douille (1002), la butée murale (5) étant en contact avec un côté du mur (1000) et/ou un côté extérieur (7) de la douille (1002), et la nervure de serrage (6) étant en contact avec un côté intérieur de la douille (1002).

13. Agencement selon la revendication 12, dans lequel un joint d'étanchéité, de préférence un joint en mousse, est agencé entre le store extérieur (101) et un côté du mur (1000) tourné vers le store extérieur (101).

14. Agencement selon l'une des revendications 12 ou 13 précédentes, dans lequel le manchon (1002) présente un élément d'engagement (1005) qui s'engage dans une ou la rainure (18) de la douille murale (1).
